# EUROPEAN PATENT SPECIFICATION

(11) **EP 2 141 866 B1**
(45) Date of publication and mention of the grant of the patent: **03.08.2011**
(21) Application number: 08305363.7
(22) Date of filing: 30.06.2008
(51) Int. Cl.: H04L 12/56

(54) **Method and apparatus for finding a path in a GMPLS controlled network**
Verfahren und Vorrichtung zum Finden eines Pfades in einem GMPLS-gesteuerten Netzwerk
Procédé et appareil pour trouver un chemin dans un réseau GMPLS contrôlé

(43) Date of publication of application: 06.01.2010
(73) Proprietor: Alcatel Lucent, 75008 Paris (FR)
(72) Inventor: Grammel, Gert, 71254 Ditzingen (DE)
(74) Representative: Urlichs, Stefan

(56) References cited:
- EP-A- 1 755 286
- ANNA URRA FÀBREGAS: "Multi-Layer-Survivability:Routing Schemes for GMPLS based Networks"[Online] July 2006 (2006-07), XP002509015 Girona, Spain Retrieved from the Internet: URL:http://www.tesisenxarxa.net/TESIS_UdG/ AVAILABLE/TDX-0214107-133346//tauf.pdf> [retrieved on 2008-12-22]
- GANGULY S ET AL: "Waveband routing and merging in hybrid optical networks" COMMUNICATIONS, 2004 IEEE INTERNATIONAL CONFERENCE ON PARIS, FRANCE 20-24 JUNE 2004, PISCATAWAY, NJ, USA,IEEE, vol. 3, 20 June 2004 (2004-06-20), pages 1615-1621, XP010710149 ISBN: 978-0-7803-8533-7

## Description

### Field of the Invention

The present invention relates to the field of telecommunications and more particularly to a method and apparatus for finding a path in a GMPLS controlled network.

### Background of the Invention

In transport networks, connections are provisioned through a management plane. While this was formerly done by human operators manually, automated switching techniques are currently being developed, which allow provisioning of connections on request. A control plane is added to the transmission network, the latter is hence referred to as the data plane. The control plane contains distributed controllers respectively associated to network elements of the transport network. These controllers communicate with each other to interchange information about the network topology and requests to establish connections and configure their associated network elements to eventually establish the requested connections.

A protocol suite that has been defined for this purpose is known as the Generalized Multi-Protocol Label Switching (GMPLS) protocol. It contains protocols like OSPF-TE (Open Shortest Path First - Traffic Engineering) to interchange topology information, RSVP-TE (Resource Reservation Protocol - Traffic Engineering) for reservation and label distribution, and LMP (Link Management Protocol) for link provisioning and fault isolation.

GMPLS extends the well known Multi-Protocol Label Switching (MPLS) technique to handle a variety of different switching technologies such as packet switching, layer 2 switching, TDM (time domain multiplexing) switching, wavelength switching, and fiber switching. The Internet Draft entitled "General Multi-Protocol Label Switching (GMPLS) Protocol Extensions for Multi-Layer and Multi-Region Networks (MLN/MRN)" by D. Papadimitriou et al, submitted in July 2007 to the Internet Engineering Task Force (IETF), describes requirements for a GMPLS-controlled network which covers multiple switching types. This Internet Draft is incorporated by reference herein.

A data plane layer is defined as a collection of network resources capable of terminating and/or switching data traffic of a particular format. An example of a network with multiple switching layers could be a network with a first layer for wavelength switching and two layers for TDM switching, for instance a higher order and a lower order layer of the SDH (Synchronous Digital Hierarchy, see ITU-T G.707). A network comprising transport nodes with different data plane switching layers controlled by a single GMPLS control plane instance is called a Multi-Layer Network (MLN), while a network comprised of multiple switching types controlled by a single GMPLS control plane instance is called a Multi-Region Network (MRN).

The thesis "Multi-Layer Survivability: Routing Schemes for GMPLS-based Networks" by A. Urra Fàbregas gives an overview over existing restoration and routing techniques in GMPLS-controlled networks.

The conference article "Waveband Routing and merging in hybrid Optical Networks" by S. Ganguly et al, IEEE Communications Society 2004, vol. 3, pages 1615-21 describes a minimum cost routing algorithm for all-optical networks consisting of hybrid nodes, which employ all- optical and optical-electrical switching. The article concludes that the use of waveband switching leads to reduction of overall port cost and proposes two combined routing and merging algorithms, where routing decisions depend on the merging process.

EP1755286A1 describes a routing method in multi-layer networks which is based on a least cost algorithm but uses an additional cost value if for a higher network layer, server layer connections, which are termed forwarding adjacencies, have to be established at a lower network layer. The algorithm hence prefers connections, which involve only one network layer.

### Summary of the Invention

A general advantage of GMPLS-controlled networks is the ability to restore failed network connections after occurrence of a failure. The time required to perform restoration should be as short as possible. It is therefore an object of the present invention to provide an improved method and network device, which allows faster restoration from failures.

These and other objects that appear below are achieved by a method of finding an alternate path through a hybrid transport network upon occurrence of a failure that has the steps of:
- assigning cost values to links in the network such that links terminated by at least one optical type network element has a higher cost value than links terminated by only electrical type network elements;
- detecting the failure; and
- computing an alternate route through the network using a least-cost algorithm.
Preferably, prior to path computation, cost values of links along the failed path are temporarily set to a lower value.

The invention is based on the recognition that in hybrid networks, that depending on the switching layer, network elements will require longer or shorter than others to affect switching of a new connection. A hybrid network can contain for instance network elements which perform O/E conversion and switch connections through an electronic switch fabric or as well as network elements which perform switching in the optical domain, i.e. without requiring O/E conversion. This will affect the recovery time, which can vary between some hundreds of milliseconds up to few minutes, depending on the type of the network elements involved. For this reason, known mechanisms which are suitable for homogeneous networks, will lead to cheapest routes in hybrid networks, but the restoration performance will be low since the slowest node in the network determines the recovery performance of the service.

In order to achieve an improved recovery performance, the present invention takes into account the switching performance of the individual nodes in the network.

The method according to the invention provides fast recovery in hybrid networks and tends to keep any network dynamics in the electrical domain, while the churn in the optical domain remains low. The algorithm converges also if there are no electrical switching devices available to restore and is hence non blocking.

### Brief Description of the Drawings

Preferred embodiments of the present invention will now be described with reference to the accompanying drawings in which
- figure 1: shows a hybrid transport network including electrical and optical network nodes;
- figure 2: shows failure notification in the network of figure 1;
- figure 3: shows failure restoration by establishing a new path in the network of figure 1;
- figure 4: shows a network element and
- figure 5: shows a flow chart of the restoration actions.

### Detailed Description of the Invention

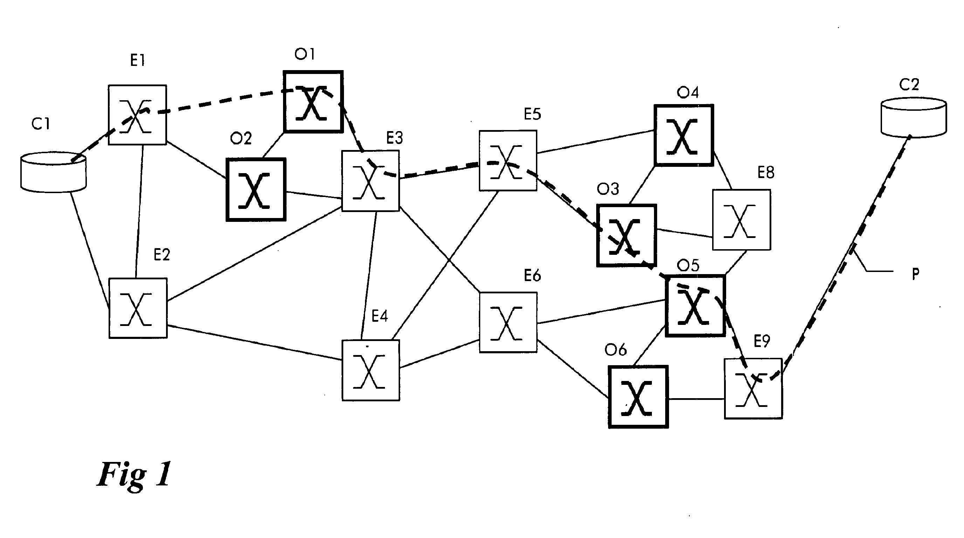

A hybrid transport network is shown by way of example in figure 1. It contains a number of electrical network elements E1-E9 and a number of optical network elements 01-06. It should be understood that electrical network elements perform O/E conversion and switch signals or sub-signals (e.g. timeslots) electrically, while optical network elements perform optical switching of signals or sub-signals (e.g. wavelengths). Examples of optical network elements are reconfigurable optical add/drop multiplexers (ROADMs) and wavelength-selective switches (WSSes). Examples of electrical network elements are crossconnects, add/drop multiplexers, and terminal multiplexers of the Synchronous Digital. Hierarchy (SDH).

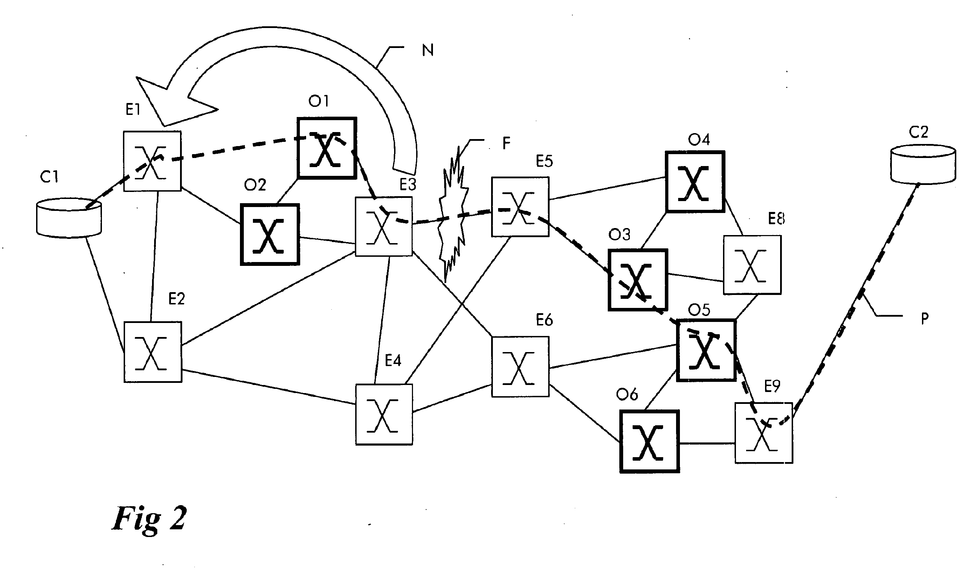

In the example network, a first client network element C1 is connected in parallel to two electrical network elements E1, E2 and a second client network element C2 is connected to electrical network element E9. A bidirectional signal path P is established through the network passing from client node C1 via network nodes El, 01, E3, E5, 03, 05, E9 to client node C2. in figure 2, a failure F occurs between network elements E3 and E5 thus interrupting the signal path P. The failure is detected by adjacent network element E3 and notified using known notification mechanism to terminating network element E1.

The network is GMPLS controlled so that automatic restoration actions in the control plane (not shown) can restore the signal path. Terminating network element E1 is responsible for the restoration. In its associated GMPLS controller (not shown), a routing algorithm determines an alternative path through the network. For this purpose, the controller stores network topology information in a traffic engineering database. According to the GMPLS protocol suit, such information is exchanged using the OSPF-TE protocol. Once the controller has determined a new path, it sends via the control plane connection requests to the involved other network elements to establish the new connection along the chosen path.

The invention is concerned with how to determine this new path in a hybrid network environment including electrical and optical switching nodes. According to the invention, the algorithm does not calculate the only cheapest path in terms of mere link costs but takes also duly into account the switching time, each network element would require to switch the new connection.

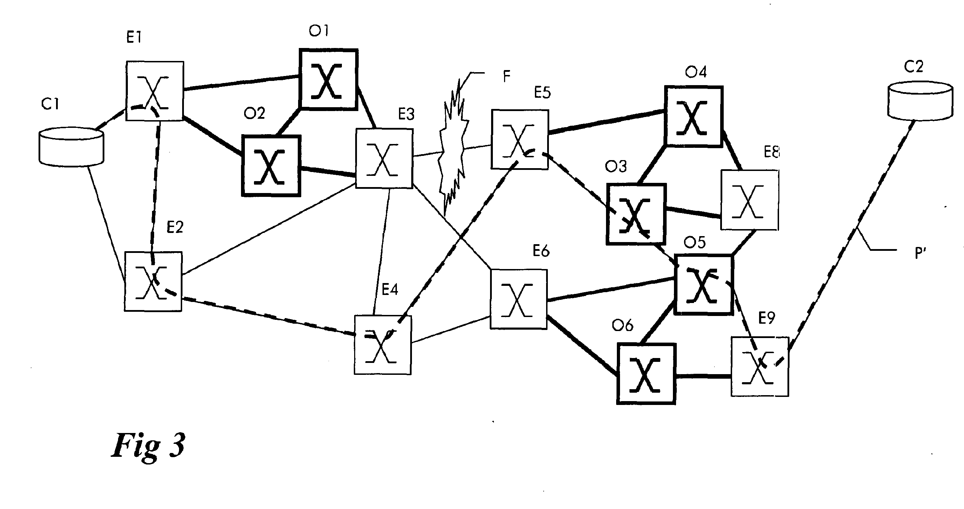

In figures 1 and 2,optical network elements O1-O6 are drawn with bold lines for the sake of better differentiation. Referring now to figure 3, all links that are terminated by at least one optical network element are also drawn in bold lines.

The wavelength spectrum between two electrical network elements which is passing through one or several optical network elements is modeled as a 'Forwarding adjacency' between two adjacent electrical network elements. The cost assigned to that Forwarding adjacency shall be lower than the cost of any direct link between an electrical network element and an optical network element or between two optical network elements. This ensures that links between electrical network elements are in general cheaper than links passing optical network elements.

Once a failure occurs on a link, the failure-adjacent network element notifies the failure to the source node, i.e. the ingress node of the connection failed. This ingress node can be either an optical or an electrical network element.

For the determination of a restoration path, the source node uses the route information of the broken service (wavelength) and temporarily sets all link costs along this route equal to 0 (or any other lower value). This allows to minimize the number of new cross-connections in most of the practical cases. For example, path P crossing 6 links where only 1 is broken (failure F) has still 5 links in operation which have already the 'right' cross-connections established.

Then a new optimum path is calculated using known cost-based route computation mechanisms such as OSPF or IS-IS. Since the resources already used by the wavelength service is in general cheaper than any new resource, and links or Forwarding adjacencies between two electrical nodes are cheaper than links confined by optical network elements, there is a high probability that the selected path uses links confined by electrical network elements. This results in a faster path set-up and hence reduced restoration time.

In the preferred embodiment, the algorithm may additionally use the mechanisms described in the Internet draft (IETF) draft-papadimitriou-ccamp-gmpls-mrn-extensions-04.txt, which is incorporated by reference herein, where an optical network element may be transparent for transit traffic.

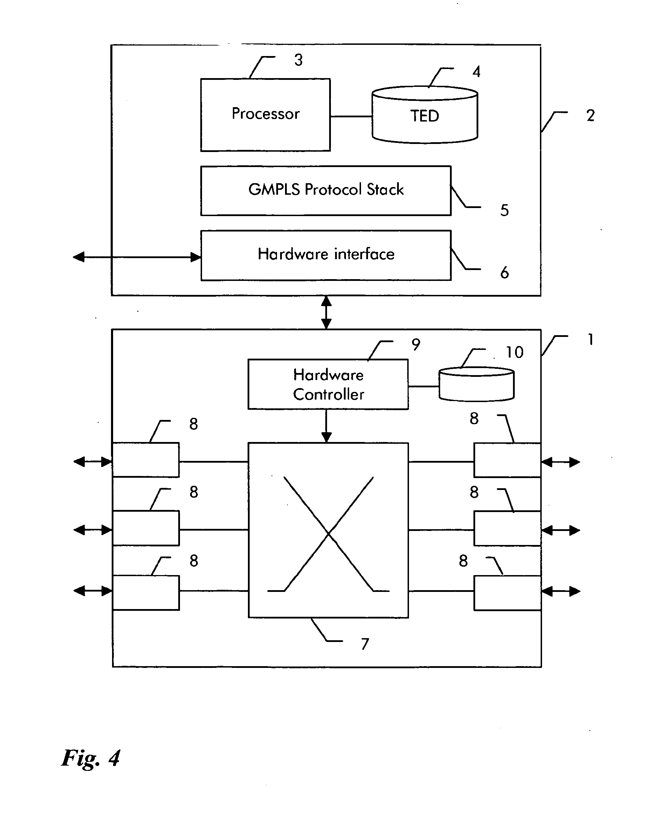

A network element that can be used in a hybrid network is shown in figure 4. It contains the network node 1 as such, i.e. the switching device that actually handles the transport signals in the data plane and a GMPLS controller 2 which forms part of the distributed control plane of the transport network.

The GMPLS controller contains a processor 3 implementing the path computation algorithm and other control and maintenance functions, a traffic engineering database (TED) 4, a GMPLS protocol stack 5 for the communication via a hardware interface 6 with other GMPLS network elements. The hardware interface is preferably an Ethernet interface, which may be connected on the one hand via a local LAN to other network elements co-locate nearby or with the network node 1 for communication via overhead signaling, e.g. via the digital control channel (DCC) of SDH.

The network node 1 of the data plane contains a number of input/output (I/O) interfaces 8 for transport signals such as SDH, SONET (ITU-T G.707) or OTH (ITU-T G.709) signals, The I/O interfaces 8 are connected to a switch fabric 7, for example a time-space switch matrix. The Network node 1 further contains a hardware controller 9 capable of controlling and configuring the switch matrix as well as the I/O interfaces, and a persistency database 10, for saving configuration data such as the connection map of the switch fabric.

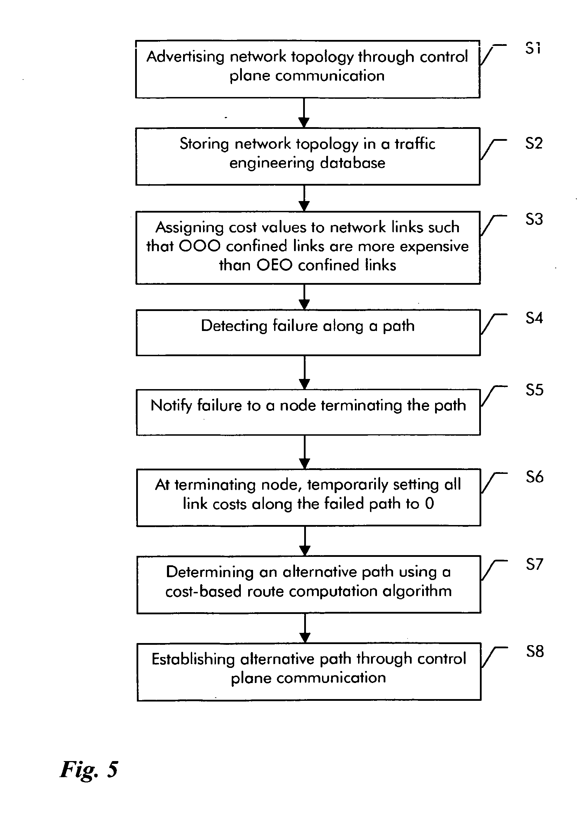

The actual path computation algorithm is shown in a flow chart of figure 5. The algorithm contains a step S1 of advertising network topology information within the control plane. Typically, all GMPLS controllers in the control plane perform this step using the OSPF-TE protocol. Received topology information is stored in a step S2 in the local TED. For the purpose of path computation, each link has assigned a cost value to it. As explained above, the cost value of links confined by electrical network elements is lower than the cost value of links terminated on either side by an optical network element. Further, according to an advantageous aspect of the invention, existing connections passing optical network elements (forwarding adjacencies) are also assigned a cost value, to treat them as an existing entity for the purpose of path computation.

When a failure such as failure F in figure 2 occurs along an existing path, such failure is detected (step S4), typically by a failure-adjacent network element (E3 in figure 2), and notified to the node terminating the path (step S5). The failure adjacent network element is hence responsible for calculating an alternative path and switch traffic to this new path to restore the service. This happens at the GMPLS controller assigned to the terminating node.

In step S6, the responsible controller temporarily sets all cost values of links along the failed path to 0 (or another lower value) and determines an alternative path using the topology information stored in its TED. This determination step S7 uses a cost-based route computation algorithm. Such algorithms as such are generally known in the art.

Once the alternative path is calculated, appropriate connection requests are sent in step S8 via the data plane to establish the path and restore the service.

It should be noted that the description of the above embodiment is just one way to carry out the invention but that various modifications and amendments could be made based on the above principles and ideas. For example, the path computation needs not necessarily be made by a path terminating node but can be made at any other network element along the path of elsewhere in the network. This could be advantageous for instance to balance computational workload in the network according to the principles of grid computing. Further, a first improvement is achieved by the use of different costs values for different type network elements (electrical versus optical) and a second improvement is achieved by the use of temporary assignment of lower values to links along the failed path. Such link costs can be set to zero or to another value substantially lower that the initial value or even to a negative value, in order to reward selection of links involving "right" cross-connections.

## Claims

1. A method of finding an alternate path through a hybrid transport network upon occurrence of a failure, such hybrid transport network comprising electrical type network elements (E1-E9) performing O/E conversion and electrical switching and optical type network elements (01-06) performing optical switching, the method comprising the steps of:
- assigning cost values to links in the network;
- detecting the failure (F); and
- computing an alternate route (P') through the network using a least-cost algorithm
**characterized in that**
said cost values are assigned such that links terminated by at least one optical type network element (O1-O6) have a higher cost values than links terminated by only electrical type network elements (E1 -E9);.

2. A method according to claim 1, further comprising:
- upon detecting said failure, temporarily setting cost values of links still in operation along the failed path (P) to a lower value.

3. A method according to claim 2, wherein said lower value is zero.

4. A method according to claim 1, wherein said failure (F) is detected by a failure adjacent network element (E3) and notified to a network element (E1) terminating the failed path (P).

5. A method according to claim 1, wherein said least-cost algorithm is one of OSPF or IS-IS algorithm.

6. A method according to claim 1 further comprising:
- assigning to an optical channel existing between two electrical type network elements, which is passing through one or several optical type network elements a cost value, which is lower than the cost of any direct link between an electrical type network element and an optical type network element or between two optical type network elements.

7. A network element (1, 2) of a hybrid transport network, comprising:
a number of interfaces (8) for transport signals and an electrical or optical switch fabric (7); further comprising a controller (2) of a control plane of the transport network; said controller (2) comprising a hardware interface (6) and protocol stack (5) for control plane communication, a processor (3) and a traffic engineering database (4);
**characterized in that**
said processor (3) is adapted to perform the steps of the method of any of the preceding claims 1-6.

## Patentansprüche

1. Verfahren zum Finden eines alternativen Pfads durch ein hybrides Transportnetzwerk nach Auftreten eines Fehlers, wobei das besagte hybride Transportnetzwerk elektrische Netzwerkelemente (E1-E9) für die O/E-Umwandlung und das elektrische Schalten sowie optische Netzwerkelemente (O1-O6) für das optische Schalten umfasst, wobei das Verfahren die folgenden Schritte umfasst:
- Zuordnen von Kostenwerten an Verbindungsabschnitte in dem Netzwerk;
- Erkennen des Fehlers (F); und
- Berechnen einer alternativen Route (P') durch das Netzwerk unter Verwendung eines Least-Cost-Algorithmus,
**dadurch gekennzeichnet, dass**
die besagten Kostenwerte derart zugeordnet werden, dass Verbindungsabschnitte, die von mindestens einem optischen Netzwerkelement (O1-O6) abgeschlossen werden, einen höheren Kostenwert aufweisen als Verbindungsabschnitte, die nur von elektrischen Netzwerkelementen (E1 -E9) abgeschlossen werden.

2. Verfahren nach Anspruch 1, weiterhin umfassend:
- Nach Erkennen des besagten Fehlers, vorübergehendes Setzen der Kostenwerte von Verbindungsabschnitten, die auf dem fehlerhaften Pfad (P) noch in Betrieb sind, auf einen niedrigeren Wert.

3. Verfahren nach Anspruch 2, wobei der besagte niedrigere Wert Null ist.

4. Verfahren nach Anspruch 1, wobei der besagte Fehler (F) von einem mit dem Fehler benachbarten Netzwerkelement (E3) erkannt und an ein Netzwerkelement (E1), welches den fehlerhaften Pfad (P) abschließt, gemeldet wird.

5. Verfahren nach Anspruch 1, wobei der besagte Least-Cost-Algorithmus entweder ein OSPF- oder ein IS-IS-Algorithmus ist.

6. Verfahren nach Anspruch 1, weiterhin umfassend:
- Zuordnen, zu einem zwischen zwei elektrischen Netzwerkelementen bestehenden und einen oder mehrere optische Netzwerkelemente durchlaufenden optischen Kanal, eines Kostenwerts, welcher niedriger ist als die Kosten eines beliebigen direkten Verbindungsabschnitts zwischen einem elektrischen Netzwerkelement und einem optischen Netzwerkelement oder zwischen zwei optischen Netzwerkelementen.

7. Netzwerkelement (1, 2) eines hybriden Transportnetzwerks, umfassend:
Eine Anzahl von Schnittstellen (8) für Transportsignale und eine elektrische oder optische Switch Fabric (7); weiterhin umfassend eine Steuerung (2) einer Steuerebene des Transportnetzwerks; wobei die besagte Steuerung (2) eine Hardware-Schnittstelle (6) und einen Protokollstapel (5) für die Kommunikation der Steuerebene, einen Prozessor (3) und eine Traffic-Engineering-Datenbank (4) umfasst;
**dadurch gekennzeichnet, dass**
der besagte Prozessor (3) für das Ausführen der Schritte des Verfahrens eines beliebigen der vorstehenden Ansprüche 1 - 6 ausgelegt ist.

## Revendications

1. Procédé pour trouver un trajet alternatif à travers un réseau de transport hybride lors de l'apparition d'une défaillance, un tel réseau de transport hybride comprenant des éléments de réseau de type électrique (E1 à E9) exécutant une conversion optique/électrique et une commutation électrique et des éléments de réseau de type optique (01 à 06) exécutant une commutation optique, le procédé comprenant les étapes suivantes :
- attribuer des valeurs de coût à des liaisons dans le réseau;
- détecter la défaillance (F) ; et
- calculer un chemin alternatif (P') à travers le réseau en utilisant un algorithme de coût minimum
**caractérisé en ce que**
lesdites valeurs de coût sont attribuées de sorte que des liaisons terminées par au moins un élément de réseau de type optique (01 à 06) présentent des valeurs de coût supérieures à celles des liaisons terminées uniquement par des éléments de réseau de type électrique (E1 à E9).

2. Procédé selon la revendication 1, comprenant en outre l'étape suivante:
- lors de la détection de ladite défaillance, régler temporairement les valeurs de coût de liaisons toujours en fonctionnement le long du trajet défaillant (P) sur une valeur inférieure.

3. Procédé selon la revendication 2, dans lequel ladite valeur inférieure est zéro.

4. Procédé selon la revendication 1, dans lequel ladite défaillance (F) est détectée par un élément de réseau de défaillance adjacent (E3) et signalé à un élément de réseau (E1) terminant le trajet défaillant (P).

5. Procédé selon la revendication 1, dans lequel ledit algorithme de coût minimum est un algorithme OSPF ou IS-IS.

6. Procédé selon la revendication 1 comprenant en outre l'étape suivante:
- attribuer à un canal optique présent entre deux éléments de réseau de type électrique, qui traverse un ou plusieurs éléments de réseau de type optique, une valeur de coût, qui est inférieure au coût de n'importe quelle liaison directe entre un élément de réseau de type électrique et un élément de réseau de type optique ou entre deux éléments de réseau de type optique.

7. Élément de réseau (1, 2) d'un réseau de transport hybride, comprenant:
plusieurs interfaces (8) pour des signaux de transport et une matrice de commutation électrique ou optique (7) ; comprenant en outre un contrôleur (2) d'un plan de commande du réseau de transport ; ledit contrôleur (2) comprenant une interface matérielle (6) et une pile de protocoles (5) pour la communication de plan de commande, un processeur (3) et une base de données d'ingénierie de trafic (4) ;
**caractérisé en ce que**
ledit processeur (3) est adapté pour exécuter les étapes du procédé de l'une quelconque des revendications précédentes 1 à 6.
